# EUROPEAN PATENT SPECIFICATION

(11) **EP 3 669 722 B1**
(45) Date of publication and mention of the grant of the patent: **03.11.2021**
(21) Application number: 18213957.6
(22) Date of filing: 19.12.2018
(51) Int. Cl.: A47J 42/44, A47J 47/01, A47G 19/34

(54) **HANDHELD DOSING DEVICE FOR SPICES**
HANDHALTBARE DOSIERVORRICHTUNG FÜR GEWÜRZE
DISPOSITIF DE DOSAGE PORTABLE POUR ÉPICES

(43) Date of publication of application: 24.06.2020
(73) Proprietor: BSH Hausgeräte GmbH, 81739 München (DE)
(72) Inventor: Bui Tran, Duc Hanh, 81247 München (DE); Gül, Ugur Dogan, 80687 München (DE); Lorenz, Martina, 80333 München (DE); Pektas, Semra, 81541 München (DE); Philipp, Stefan, 80687 München (DE); Rodriguez Garcia, Aida, 81737 München (DE)

(56) References cited:
- US-A1- 2013 193 246
- US-A1- 2014 018 943
- US-A1- 2015 060 482
- US-A1- 2016 286 837

## Description

The present document relates to the seasoning of food. In particular, the present document relates to a handheld device for seasoning food.

The taste of a homemade dish largely depends on the correct seasoning of the dish. Many amateur cooks have difficulties when it comes to finding pleasant combinations and/or mixtures of spices for a dish and/or when it comes to applying the right amount of spices to a dish.

Document US-A-2013/0193246 discloses a hand-held dosing device according to the preamble of independent claim 1. The present document addresses the technical problem of enabling a cook to perform the seasoning of a dish in a comfortable and reliable manner. The technical problem is solved by the independent claim. Preferred examples are described in the dependent claims. According to an aspect a handheld dosing device for dosing one or more spices is described. The dosing device comprises a drive unit and a dispensing unit. The drive unit and the dispensing unit comprise respective coupling elements for coupling the dispensing unit to the drive unit in a detachable manner. The dispensing unit comprises a storage compartment configured to store a spice or a spice mix. Furthermore, the dispensing unit comprises a dispensing mechanism configured to transfer an adjustable amount of the spice from the storage compartment to an opening of the dosing device (notably to an opening of the dispensing unit). In addition, the drive unit comprises a control unit which is configured to determine a target amount of the spice to be dispensed. The control unit is further configured to automatically operate and/or drive and/or actuate the dispensing mechanism in order to transfer the target amount of the spice to the opening of the dosing device (notably to the opening of the dispensing unit). The target amount may be determined prior to operating the dispensing mechanism of the dispensing unit.

The invention is explained below in an exemplary manner with reference to the accompanying drawings, wherein
Figure 1 shows an example dosing device for dosing spices;
Figure 2 shows an example dispensing mechanism for a dispensing unit; and
Figures 3a to 3c show example dispensing units which allow for manual and automatic dosing.

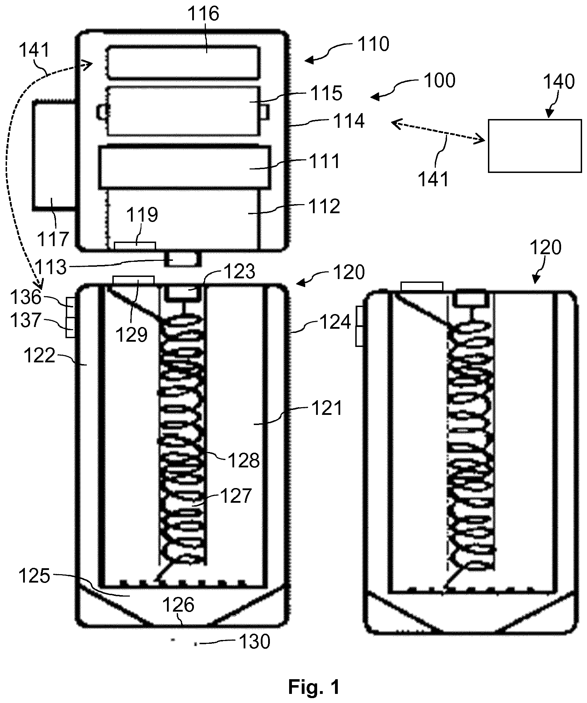

As outlined above, the present document is directed at enabling a cook to perform the seasoning of a dish in a reliable and comfortable manner. In this context, Fig. 1 shows a dosing device 100 which comprises a drive unit 110 and a dispensing unit 120 that may be attached to one another via respective coupling elements 113, 123 (e.g. magnetic coupling elements).

A dispensing unit 120 comprises a housing 124 which may have a cylindrical form. The housing 124 encloses a storage compartment 121 for storing a particular spice 130 or spice mixture. Furthermore, the dispensing unit 120 comprises an automatic dispensing or dosing mechanism which may be actuated by the drive unit 110 and which may be configured to provide a defined amount of spice 130 from the storage compartment 121 at an opening 126 of the dispensing unit 120.

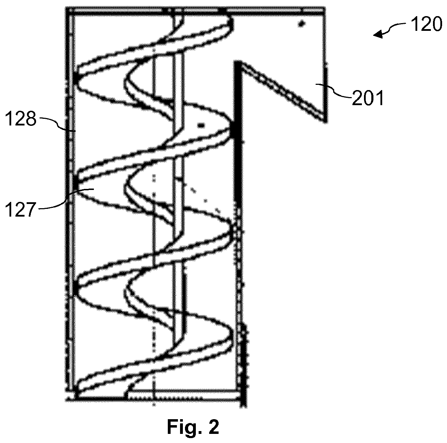

In the illustrated example, the dispensing mechanism comprises a transfer channel 128 which is positioned within the storage compartment 121, and a screw-conveyer 127 which is arranged within the transfer channel 128 and which is configured to extract spice 130 from the storage compartment 121 and to transfer the spice 130 through the transfer channel 128 (e.g. via a ramp 201, as shown in Fig. 2) to an output channel 122 of the dispensing unit 120, wherein the output channel 122 leads to the opening 126 of the dispensing unit 120 (e.g. via a funnel-shaped section 125). Hence, the spice 130 may be lifted from the bottom of the storage compartment 121 to a ramp 201 using the screw-conveyer 127. Furthermore, the lifted spice 130 may slide or fall to the opening 126 via an opening channel 122 (when the dosing device 100 is held in the upright position). Different dispensing units 120 may be provided for storing different types of spices 130. The different dispensing units 120 may be attached sequentially to the drive unit 110 for adding different types of spices 130 to a dish. A dispensing unit 120 may comprise an identification module 129 which comprises an identification or an identifier of the dispensing unit 120 and/or of the type of spice 130 which is stored within the dispensing unit 120. The identification module 129 may comprise and/or be an RFID (radio frequency identification) chip, a machine-readable code (such as a barcode or a QR code), etc.

The drive unit 110 comprises an engine 112 (notably an electrical motor) which is configured to actuate the automatic dispensing mechanism, notably the screw-conveyer 127, of a dispensing unit 120 that is attached to the drive unit 110. The actuation may be transmitted via the coupling elements 113, 123 of the drive unit 110 and the dispensing unit 120. Furthermore, the drive unit 110 comprises a control unit 111 which is configured to control the operation of the dosing device 100.

In addition, the drive unit 110 may comprise a user interface 117 for a user of the dosing device 100. The user interface 117 may comprise one or more input elements and/or one or more output elements. An input element enables a user to perform a user input, e.g. for starting or stopping the operation of the dosing device 100. An input element may comprise or may be a (mechanical or virtual) button on the housing 114 of the drive unit 110. An output element, such as a display, a lighting element, a loudspeaker, etc., may be configured to provide a feedback or information to a user of the dosing device 100. Furthermore, the drive unit 110 may comprise a battery 115 which is configured to store electrical energy for operation of the dosing device 100, notably for operation of the engine or motor 112. The battery 115 may be rechargeable, e.g. via a charging interface (not shown) of the drive unit 110.

The drive unit 110 according to the invention comprises a communication module 116 which is configured to perform data exchange via a wireless communication link 141 (e.g. a WLAN, Bluetooth, Zigbee, etc. link) with for example an external unit 140, such as a backend server and/or a smartphone. The control unit 111 may be configured to download formulas for mixtures of spices 130 and/or recipes for dishes via the wireless communication link 141 from an external unit 140. Alternatively or in addition, the control unit 111 may be configured to provide information regarding the dosing device 100 (e.g. information regarding the fill-level of the dispensing unit 120 which is attached to the drive unit 110) to an external unit 140 (e.g. to a smartphone of a user of the dosing device 100).

Hence, a plug and play handheld dosing device 100 is described which supports a user of the device 100 during the seasoning process when cooking a dish. The device 100 is configured to dose defined amounts of different spicery or herbs 130 for specific dishes. The formula of the amounts and/or combination of different spicery or herbs 130 may be pre-saved and/or created by the user and may be shared with other users online (via the communication module 116).

The device 100 comprises as an upper part a (network connected) drive unit 110 and as a lower part one or more exchangeable dispensing units 120 which may be used to store different types of spices 130. A dispensing unit 120 may be configured to perform grinding and/or shaking of the spice 130 which is stored within the storage compartment 121 of the dispensing unit 120.

Main components of the drive unit 110 may be a battery 115, a motor 112, a processor or control unit 111, a connectivity or communication module 116 (e.g. WiFi and/or Bluetooth), a RFID and/or NFC reader 119 (also referred to as an identification sensor), and/or a user interface 117 (e.g. comprising a touch screen and/or one or more mechanical buttons). The drive unit 110 drives a dispensing unit 120 which is attached to the drive unit 110. Furthermore, the drive unit 110 may act as an interface towards the user (e.g. via a Bluetooth or Wifi link 141 and a Smartphone, a tablet etc. of the user, or directly via the integrated user interface 117 of the drive unit 110).

An RFID and/or NFC based identification module 129 may be used for identification of the dispensing unit 120 which is coupled to the drive unit 110. The control unit 111 of the drive unit 110 may be configured to identify the dispensing unit 120 which is coupled to the drive unit 110 (using the sensor data provided by the identification sensor 119). The mode of driving the engine 112 for dosing a specific amount of spice 130 may be adjusted depending on the identified dispensing unit 120 (and/or depending on the type of spice 130 comprised within the identified dispensing unit 120).

A dispensing unit 120 may be connected mechanically to the drive unit 110 via a magnetic coupling mechanism. An input element (e.g. a button) may be provided, wherein the input element may be pushed by a user, in order to detach a dispensing unit 120 from the drive unit 110, thereby enabling the change of dispensing units 110. A dispensing unit 120 may be equipped with a RFID / NFC tag, i.e. with an identification module 129, that may be used for the identification of the dispensing unit 120 and/or for verification of the mechanical connection between the dispensing unit 120 and the drive unit 110.

The dispensing unit 120, notably the storage compartment 121, may be refillable (e.g. via a refilling opening, which is not shown in Fig. 1). Hence, standard refill packages and/or specifically designed cartridges and/or capsules (i.e. standard storage compartments 121) that are plugged into a dispensing unit 120 (e.g. from the bottom of the dispensing unit 120) may be provided for refilling of a dispensing unit 120. Hence, the storage compartment 121 of a dispensing unit 120 may be designed in an exchangeable manner. The mechanical and/or electrical parts may be part of the dispensing unit 120, such that only the storage compartment 121 (e.g. formed as a cartridge or capsule) may need to be exchanged. Hence, as soon as a cartridge and/or capsule (i.e. a storage compartment 121) is empty, a user may remove the cartridge and/or capsule (i.e. the storage compartment 121) from the dispensing unit 120 and replace it by a new cartridge and/or capsule (i.e. storage compartment 121).

Depending on the type of spice 130, which is stored within a dispensing unit 120 (e.g. depending on whether the spice 130 is a powder, a grain, a corn, a herb, etc.), the technical principle of the dispensing unit 120 may vary. For grains, corns and/or herbs the dispensing unit 120 may work as a spice grinder. For a powder, the dispensing unit 120 may be equipped with a screw-conveyor 127 that transports the powder from the bottom to the top of the storage compartment 121 for dispensing the powder at the top of the storage compartment 121, e.g. via a ramp 201. The dispensed powder may be adjusted by adjusting the duration and/or the speed of operation of the screw-conveyor 127.

A user may be enabled to precisely dispense specific amounts of one or more types of species 130 which are needed when cooking. This can be done by selecting the required target amount of a spice 130 via the integrated user interface 117 of the drive unit 110 and/or via a SW application running on an external unit 140 (e.g. a smartphone of the user). The target amount may be set prior to starting the dispensing process of the dispensing unit 120.

One or more different measuring units (such as "gram", "number of tea spoons", "number of table spoons", "number of cups", etc.) may be used for defining the target amount of a spice 130 that is to be dispensed by a dispensing unit 120. Subsequent to the selection of the target amount, the drive unit 110 may be operated in dependence of the dispensing unit 120 which is connected to the drive unit 110 and in dependence of the target amount, in order to dispense the selected target amount of the spice 130 which is stored within the dispensing unit 120.

The dosing device 100 may be configured to guide a user in the task of seasoning a dish. There may be different options or modes for such a guided seasoning process. The dosing device 100 may be configured to provide a list of pre-determined spices mixes. A particular spice mix may be pre-stored on a storage unit of dosing device 100. Alternatively or in addition, a particular spice mix may be a personal creation of the user of the dosing device 100 which has been stored on the storage unit of the dosing device 100. Hence, a database of pre-defined and/or created spice mixes may be provided.

A user may be enabled to select a particular spice mix from the list of spice mixes (e.g. using the user interface 117 of the dosing device 100). A spice mix may comprise a formula indicating the types of different spices 130 and their respective amounts, which form the spice mix. A spice mix may be identified using a particular name of the spice mix. By way of example, a spice mix named "Chai special" may indicate: 2 tsp (tea spoon) ground nutmeg; 2 tsp ground cardamom; 1 tsp ground cinnamon; 1 tsp ground ginger; 3 tsp ground clove; and 1 tsp ground coriander. As indicated above, different measuring units for the different types of spices 130 may be used.

Subsequent to selecting a spice mix formula, the dosing device 100 may guide the user through the seasoning process. In particular, the control unit 111 may be configured to sequentially determine the types of spices 130 which are needed for the spice mix (e.g. starting with ground nutmeg in the example given above). Furthermore, the control unit 111 may request the user to sequentially attach the dispensing units 120 comprising the different types of spices 130 to the drive unit 110. In addition, the control unit 111 may be configured to verify whether the correct dispensing unit 120 for a particular type of spice 130 has been attached to the drive unit 110 (using the identifiers of the different dispensing units 120). A feedback may be given to the user of the dosing device 100 via the user interface 117, in order to indicate to the user, whether the correct or an incorrect dispensing unit 120 has been coupled to the drive unit 110 (e.g. using a visual indication such as lighting up an LED on the user interface 117 of the drive unit 110).

The control unit 111 may be configured to indicate a required type of spice 130 on the user interface 117 of the drive unit 110 and/or on a user interface of an external unit 140 (such as a smartphone). The user may then search for the correct dispensing unit 120 and may attach the correct dispensing unit 120 to the drive unit 110. Using the identification module 129 of the dispensing unit 120, the control unit 111 may verify, whether the correct dispensing unit 120 has been attached to the drive unit 110.

According to the invention, a dispensing unit 120 comprises a communication module 136 and a signaling module 137, wherein the communication module 116 of the drive unit and the communication module 136 of the dispensing unit are configured to communicate with one another over a wireless communication link. The control unit 111 is configured to send a control signal to the particular dispensing unit 120 which contains the required type of spice 130. The particular dispensing unit 120 receives the control signal (via the communication module 136 of the dispensing unit 120) and activates the signaling module 137 (comprising e.g. an LED). Only the signaling module 137 of the particular dispensing unit 120 which comprises the required type of spice 130 may be activated (whereas the signaling modules 137 of the one or more other dispensing units 120 may remain inactivated), thereby indicating to the user of the dosing device 100 the particular dispensing unit 120 which needs to be attached to the drive unit 110. By doing this, the comfort of the user may be increased.

After attaching a dispensing unit 120 to the drive unit 110, the user may hold the dosing device 100 over the food which is being cooked. Furthermore, the user may start the dosing process via the user interface 117, e.g. by pressing a button of the user interface 117. The drive unit 110 will then automatically dispense the amount of the spice 130 which is indicated within the spice mix formula (e.g. 2 tsp of nutmeg).

Subsequent to dispensing a particular type of spice 130, the control unit 111 may initiate the process for dispensing the next type of spice 130 which is indicated within the spice mix formula. This process is repeated, until all types of spices 130 which are indicated within the spice mix formula are dispensed into the food which is being cooked.

Alternatively or in addition to selecting a spice mix, the dosing device 100 may enable a user to select a recipe for a complete dish from a database. The recipe comprises information for preparing a complete dish or meal (notably information such as ingredients (and their respective amounts) for the dish, the required types of spices (and their respective amounts) and a step-by-step description for preparing the dish). A user may select a recipe for a dish from the recipe database. Furthermore, the user may cook the dish using the step-by-step description which is indicated within the recipe. If a step of the recipe consists in adding a spice 130 to the dish, the drive unit 110 may indicate to the user which dispensing unit 120 is to be attached to the drive unit 110 (e.g. by activating the signaling module 137 of the required dispensing unit 120). The dosing process for the spice 130 may then be initiated by actuation of an input element of the user interface 117 of the dosing device 100 (wherein the dosing device 100 automatically dispenses the amount of the spice 130 which is indicated within the recipe).

Alternatively or in addition, a recipe for a dish may be selected from an internet database. Such an unstructured recipe may be preprocessed by the control unit 111 and/or by an external unit 140 (e.g. a cloud server), in order to identify the one or more steps, which relate to the dosing of a spice 130 (thereby providing a structured recipe or spice mix formula). In particular, in the context of the pre-processing of a recipe, the required types of spices 130 and their respective amounts may be extracted from the unstructured recipe. Furthermore, the one or more cooking steps may be identified which relate to the dosing of a spice 130. Subsequent to the pre-processing of a recipe, the dosing process for spices 130 may be performed as outlined above (using a structured recipe or a spice mix formula).

The dosing device 100 may enable a user to make use of a dispensing unit 120 which stores a user selected spice 130 or spice mix. Hence, a user may be enabled to fill in a spice 130 or spice mix into the storage compartment 121 of a dispensing unit 120. After manual filling of the dispensing unit 120 with the desired spice and/or spice mix, the user may be enabled (e.g. via the user interface 117 and/or via an external unit 140) to label the dispensing unit 120. In particular, it may be indicated to the drive unit 110 which spice 130 or spice mix is stored within the particular dispensing unit 120. Hence, the particular dispensing unit 120 may be matched and/or allocated to a particular spice 130 or spice mix. For this purpose, the identifier of the particular dispensing unit 120 (which is stored within the identification module 129) may be associated with the spice 130 or spice mix. The identifier of the particular dispensing unit 120 may be determined using a reader 119 of the drive unit 110 and/or a reader of an external unit 140 (e.g. a camera of a smartphone).

The drive unit 110 may be configured to exchange data with an external database (e.g. for storing and/or for downloading spice mix formulas and/or recipes). The drive unit 110 may enable a user to download pre-stored spice mix formulas and/or recipes. Alternatively or in addition, the drive unit 110 may enable a user to upload own creations of spice mix formulas and/or recipes (e.g. for reuse and/or for sharing with other users).

The drive unit 110 may enable a user to adapt a spice mix formula and/or recipe to his or her personal preferences. For this purpose, a feedback process may be provided. Furthermore, the user may be enabled to store a personal profile. The personal profile may comprise information about the eating and/or seasoning preferences of the user (notably with regards to the types and/or amounts of spices 130).

Using a "Learning and Adaption" component which tracks the kind of spice mixes and/or recipes, which are used by a user, the personal preferences of the user may be tracked and stored within a user profile. Alternatively or in addition, the dosing device 100 may enable a user to give feedback (e.g. via the user interface 117) regarding a spice mix and/or a recipe, thereby enabling the "Learning and Adaption" component to learn more about the taste preferences of the user. For gathering the feedback, the user may be asked one or more questions (such as "was the spice mix too spicy?"), and the response to the one or more questions may be used for determining the user preferences.

The user preferences may be used for adapting a spice mix formula. By way of example, when choosing a new spice mix formula, the control unit 111 of the dosing device 100 may automatically adapt the spice mix formula to the user preferences of the user.

Alternatively or in addition, the control unit 111 may be configured to recommend new spice mix formulas based on the user profile and/or the preferences of the user.

Furthermore, the user may be enabled to manually adapt a spice mix formula, and to save the adapted spice mix formula. By way of example, the amount of a particular type of spice 130 may be changed, an additional type of spice 130 may be added or a particular type of spice 130 may be removed, etc. The manually adapted spice mix formula may be analyzed, in order to adapt the user preferences.

The dosing device 100 may be configured to determine and/or track the filling level of spices 130 within one or more dispensing units 120. When using the device 100 for seasoning, the dispensed amount of one or more spices 130 may be recorded, in order to assess the filling level of each dispensing unit 120. Based on the knowledge about the filling level of a dispensing unit 120 at the beginning of a seasoning process and based on the ability of the device 100 to track the amount of a spice 130, which is dispensed during the seasoning process, the current filling level of the dispensing unit 120 can be assessed (as the difference of these two values). Alternatively or in addition, the filling level of a dispensing unit 120 may be assessed by using one or more sensors which are integrated into the dispensing unit 120. The fill level of each dispensing unit 120 provides the user with an overview of the current stock, the consumption and the personal spice preferences.

The dosing device 100 may provide a recording functionality for recoding the types of spices 130 (and their respective amounts) which have been added to a dish in the context of a seasoning process. The recording functionality may be started by a user via the user interface 117. Once the recording functionality has been started, the drive unit 110 tracks the one or more types of spices 130 and the respective amounts that are dispensed by the dosing device 100, until the user stops the recording functionality via the user Interface 117. The type of a spice 130 may be determined by determining the identifier of the dispensing unit 120 that is attached to drive unit 110. The recorded information may be stored as a spice mix formula (e.g. using a name input by the user via the user interface 117).

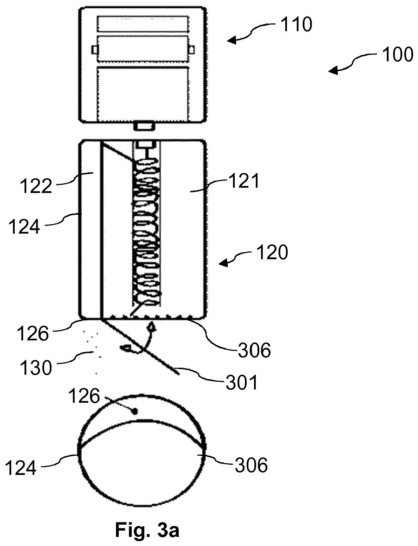

A dispensing unit 120 may be configured to allow for a manual and for an automatic dosing. In particular, manual dosing may be enabled, in case the dispensing unit 120 is not coupled to the drive unit 110. Figures 3a to 3c show different examples of a dispensing unit 120 which also allows for manual dosing. The dispensing unit 120 of Fig. 3a comprises a lid 301 which covers an opening 306 for manual dosing, when the lid 301 is closed. On the other hand, the lid 301 does not cover a separate opening 126 for automatic dosing. The lower part of Fig. 3a shows the cross section of the housing 124 of the dispensing unit 120. It can be seen, that a part of the cross section forms the opening 126 for automatic dosing and another part of the cross section forms the opening 306 for manual dosing. In other words, the base of the dispensing unit 120 may be subdivided with an arch into two parts, one part 126 for dispensing the spices 130, when the dispensing unit 120 is connected to the drive unit 110 and another part 306 for dispensing the spices 130 manually. The opening 306 for manual dosing may be closed using a lid 301 to prevent the spices 130 from being dispensed, when not using the dispensing unit 120.

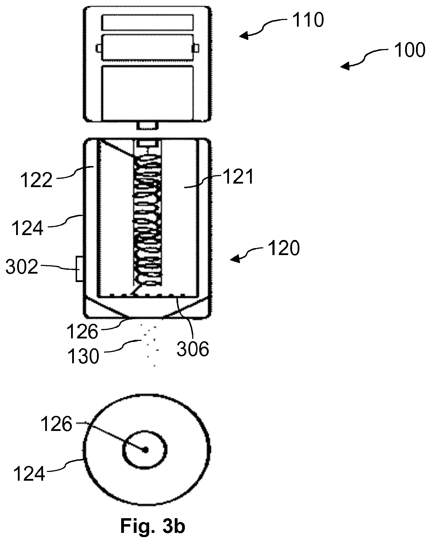

Fig. 3b shows a dispensing unit 120 with a base that comprises a central opening 126 for manual and for automatic dosing. The storage compartment 121 comprises an opening 306 which may be closed using a mechatronic system which may be actuated by an external button 302 (at the outside wall of the housing 124 of the dispensing unit 120).

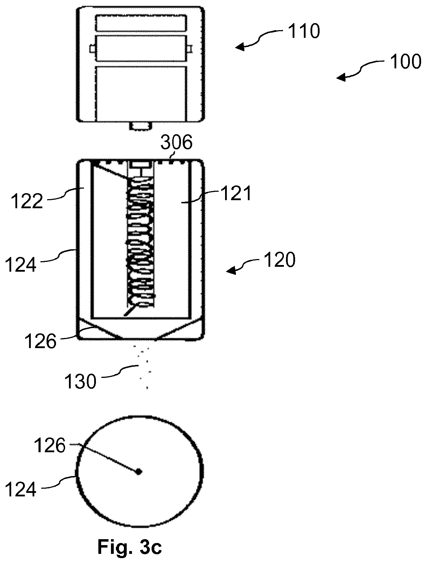

Fig. 3c shows a dispensing unit 120 which exhibits an opening 126 for automatic dispensing on one side and an opening 306 for manual dispensing on the other side of the housing 124 of the dispensing unit 120. A lid 301 may be used for closing the opening 306 for manual dispensing.

Hence, a handheld dosing device 100 is described which supports a user during the seasoning process when cooking a dish. The device 100 may be configured to dispense pre-determined amounts of different spices 130 in a precise and reproducible manner.

In particular, a handheld dosing device 100 for dosing one or more spices 130 is described in the present document. The dosing device 100 comprises a drive unit 110 and at least one or exactly one dispensing unit 120. The drive unit 110 and the dispensing unit 120 typically comprise respective coupling elements 113, 123 for coupling the dispensing unit 120 to the drive unit 110 in a detachable manner. The drive unit 110 may be configured to allow a user to select and to attach at least (or exactly) one dispensing unit 120 from a plurality of different dispensing unit 120 (for storing a plurality of different spices 130). Hence, a user may make use of the same drive unit 110 for dispensing different spices 130 from different dispensing units 120.

Overall, the dosing device 100 may have a height in the range of 5cm up to 30cm, and a diameter in the range of 2cm to 7cm (e.g. for a dosing device 100 having a cylindrical form).

The coupling elements 113, 123 may be configured to allow for a magnetic coupling between the drive unit 110 and a dispensing unit 120. By way of example, the coupling element 113 of the drive unit 110 may comprise a magnet (e.g. an electromagnet) which is configured to generate a magnetic field for attracting a magnetic element of the coupling element 123 of the dispensing unit 120. By making use of magnetic coupling elements 113, 123 different dispensing units 120 may be coupled to the drive unit 110 in a reliable and comfortable manner.

The drive unit 110 may comprise an electrical actuator 112, notably an electrical motor, for operating a dispensing mechanism 127 of a dispensing unit 120 that is attached or coupled to the drive unit 110. The electrical actuator 112 may be configured to actuate or operated the dispensing mechanism 127 through or via the coupling elements 113, 123 of the drive unit 110 and the dispensing unit 120, respectively. By way of example, a shaft of an electrical motor may be coupled via the coupling elements 113, 123 to a shaft of the dispensing mechanism 127.

Furthermore, the drive unit 110 may comprise a battery 115, notably a rechargeable battery, for providing electrical energy for operation of the dosing device 100 and/or of the drive unit 110. In addition, a charging interface may be provided at the housing 114 of the drive unit 110 for charging the battery 115 of the drive unit 110.

In addition, the drive unit 110 may comprise a user interface 117 for interaction with a user of the dosing device 100. The user interface 117 may be situated at the housing 114 of the drive unit 110. The user interface 117 may comprise one or more input elements (e.g. buttons) for user input and/or one or more output elements (e.g. one or more LEDs, a loudspeaker, a display, etc.) for user feedback.

The dispensing unit 120 may comprise a storage compartment 121 configured to store a spice 130 (e.g. a certain amount of a spice 130). By way of example, the storage compartment 121 may have a storage volume between 50ml and 200ml. The storage compartment 121 may be refillable (e.g. via a closable opening 306, which may be closed using a lid 301). Alternatively or in addition, the storage compartment 121 may be exchangeable (e.g. for replacing an empty storage compartment 121 with a full storage compartment 121).

The dispensing unit 120 comprises a dispensing mechanism 127 which is configured to transfer an adjustable amount of the spice 130 from the storage compartment 121 to an opening 126 of the dosing device 100. By way of example, the dispensing unit 120 and/or the dispensing mechanism 127 may comprise a screw-conveyer 127 which is configured to lift a certain amount of spices 130 from the bottom of the storage compartment 121 to a ramp 201 which is coupled to an opening channel 122 leading to the opening 126 of the dosing device 100 (or to the opening 126 of the dispensing unit 120). The ramp 201, the opening channel 122 and the opening 126 may be arranged such that the spice 130 slides and/or falls from the ramp 201 to the opening 126 of the dosing device 100, if the dosing device 100 is held in an upright position. By doing this, a reliable and precise dispensing mechanism 127 may be provided.

The drive unit 110 comprises a control unit 111 (e.g. a processor) which is configured to determine a target amount of the spice 130 to be dispensed. In particular, the control unit 111 may be configured to determine the target amount of the spice 130 based on a user input of a user of the dosing device 100 on the user interface 117 of the dosing device 100 (notably of the drive unit 110) and/or on a user interface of an external unit 140 which is in data communication with the dosing device 100. Alternatively or in addition, the control unit 110 may be configured to determine the target amount of the spice 130 based on a pre-determined spice mix formula for a mix of several different types of spices 130 and/or based on a recipe for a dish which is being prepared using the dosing device 100. The spice mix formula and/or the recipe may indicate target amounts for one or more different types of spices 300. The spice mix formula and/or the recipe may be stored on a storage unit of the dosing device 100 (notably of the drive unit 110). Alternatively or in addition, the spice mix formula and/or the recipe may be downloaded from an external unit 140 (e.g. a network server and/or a smartphone).

In addition, the control unit 110 of the drive unit 110 is configured to operate the dispensing mechanism 127 in order to transfer the target amount of the spice 130 to the opening 126 of the dosing device 100. Operation of the dispensing mechanism 127 may be started subsequent to determining the target amount of the spice 130.

As indicated above, the dosing device 100, notably the drive unit 110, may comprise an input element (e.g. a button) which is configured to be actuated by a user of the dosing device 100. The control unit 111 may be configured to detect an actuation of the input element and directly in reaction to this, the dispensing mechanism 127 may be operated in order to transfer the (previously determined or selected) target amount of the spice 130 to the opening 126 of the dosing device 100.

Hence, a dosing device 100 is described, which enables a user to attach one of several different dispensing units 120 (for different types of spices 130) to the drive unit 110 of the dosing device 100. Furthermore, the target amount of the spice 130 which is to be dispensed may be determined. The user may then place the dosing device 100 above a dish, and the dosing device 100 may automatically dispense the right amount (i.e. the target amount) of the spice 130 from the attached dispensing unit 120 (e.g. subsequent to initiating operation of the dispensing mechanism 127 by actuating an input element). Consequently, a precise and comfortable seasoning of a dish is enabled.

As indicated above, the dispensing of the spice 130 from the attached dispensing unit 120 may be started in reaction to the actuation of an input element of the dosing device 100. The actuation of the input element may only be directed at activating the dispensing mechanism 127. In particular, the actuation of the input element may not be directed at controlling the duration of operation of the dispensing mechanism 127 and/or at controlling the amount of the spice 130, which is transferred to the opening 126 of the dosing device 100. In other words, the dispensing mechanism 127 of the dispensing unit 120 may be automatically operated to dispense the target amount of the spice 130, notably regardless the duration of actuation of the input element. Furthermore, the dispensing mechanism 127 may be deactivated automatically, as soon as the target amount of the spice 130 has been transferred to the opening 126 of the dosing device 100 (regardless the actuation of the input element). Hence, dosing of a spice 130 may be performed in a particularly comfortable and precise manner.

The dosing device 100, notably the drive unit 110, may comprise a communication module 116 which is configured to perform data communication over a wireless communication link 141 (e.g. WLAN, Bluetooth, Zigbee, etc.) with an external unit 140 (e.g. a network server or a smartphone). The control unit 111 may be configured to receive data indicating the target amount of the spice 130 (which is to be dispensed by the dispensing unit 120 that is attached to the drive unit 110) from the external unit 140 via the communication module 116. By way of example, a spice mix formula and/or a recipe may be downloaded from a network server. Alternatively or in addition, a smartphone may be used as a user interface for setting the target amount to be dispensed by the dosing device 100. Hence, the comfort and reliability of operation of the dosing device 100 may be further increased.

The control unit 111 may be configured to determine a spice mix formula for a mix of several different types of spices 130 and/or a recipe for a dish (e.g. via a communication link 141 from an external unit 140). The spice mix formula and/or the recipe may indicate several different types of spices 130 and their respective target amounts. Hence, the seasoning of a dish may involve dosing several different types of spices 130 which may be stored in the storage compartments 121 of several different dispensing units 120.

The control unit 111 may be configured to guide a user of the dosing device 100 through the seasoning process. In particular, the control unit 111 may guide the user through a sequential process for adding the different types of spices 130, which are indicated by the spice mix formula and/or the recipe, in a sequential manner. For this purpose, the particular dispensing unit 120 from a plurality of different dispensing units 120 may be indicated and/or highlighted to a user (e.g. via the user interface 117), wherein the particular dispensing unit 120 is to be coupled to the drive unit 110 for a particular type of spice 120 that is indicated by the spice mix formula and/or the recipe.

It may be detected by the control unit 111 that the particular dispensing unit 120 has been coupled to the drive unit 110 (e.g. using data from an identification module 129 of the particular dispensing unit 120). Furthermore, the dispensing mechanism 127 may be operated to dispense the target amount of the spice 130, wherein the target amount is indicated by the spice mix formula and/or the recipe. These steps may be repeated sequentially for all types of spices 130 that are indicated by the spice mix formula and/or the recipe, thereby providing a guided seasoning process and thereby further increasing the comfort and reliability of seasoning.

The drive unit 110 and the dispensing unit 120 may each comprise a communication module 116, 136, wherein the communication modules 116, 126 are configured to communicate with one another over a wireless communication link 141 (e.g. WLAN, Bluetooth and/or Zigbee). Furthermore, the dispensing unit 120 may comprise a signaling module 137, which may comprise a light emitting diode that can be activated or deactivated. Hence, the plurality of different dispensing units 120 (for different types of spices 130) may each comprise a signaling module 137 that may be activated selectively, in order to guide a user through a seasoning process.

In particular, the control unit 111 may be configured to determine that a particular dispensing unit 120 is to be coupled to the drive unit 110 for dispensing the spice 130 which is stored within the storage compartment 121 of the dispensing unit 120. This may be determined based on a spice mix formula and/or recipe. In addition, the control unit 111 may be configured to send a control signal to the particular dispensing unit 120 for selectively activating the signaling module 137 of the dispensing unit 120. As a result of this, the particular dispensing unit 120 which is to be attached to the drive unit 110 exhibits an activated signaling module 137, wherein all other dispensing units 120 exhibit a deactivated signaling module 137, thereby clearly indicating to a user, which dispensing unit 120 is to be attached to the drive unit 110. By doing this, the comfort and reliability of a seasoning process may be further increased.

The control unit 111 may be configured to parse an unstructured recipe for a dish (e.g. an unstructured recipe from an internet database), in order to determine a structured recipe that indicates one or more types of spices 130 and their respective amounts, which are to be added during preparation of the dish. For this purpose, natural language processing techniques may be used. The actual processing may be performed on an external unit 140 (e.g. on a network sever), wherein the processing may be initiated from the user interface 117 of the dosing device 100.

In addition, the control unit 111 may be configured to use the structured recipe for guiding a user through the seasoning or dispensing process for adding the one or more types of spices 130 to the dish (as outlined above). By doing this, the range of use of the dosing device 100 may be increased.

The control unit 111 may be configured to determine the target amount for the spice 130 using one of a plurality of different measuring units. Example measuring units comprise one or more weight measuring units, notably gram or pound, and/or one or more volume measuring units, notably cubic meter, number of table spoons, number of tea spoons, number of cups, etc.. Furthermore, the control unit 111 may be configured to determine a control signal for controlling an actuator 112 for operating the dispensing mechanism 127, based on the target amount which is indicated using one of the plurality of different measuring units. For this purpose, the control unit 111 may make use of scaling data which indicates for different types of spices 130 and/or for different types of measuring units the operation time and/or operation speed of the dispensing mechanism 127, which are necessary for dispensing the target amount of the spice 130. Hence, the comfort and reliability of a seasoning process may be increased further.

The dispensing unit 120 may comprise an identification module 129 indicating an identifier of the dispensing unit 120, wherein different dispensing units 120 may exhibit different identifiers. Hence, the different dispensing 120 units (for different types of spices 130) may be identified using different identifiers. The identification module 129 of a dispensing unit 120 may comprise a radio frequency tag (notably an RFID tag and/or an NFC tag) and/or a machine-readable code (e.g. a barcode or a QR code).

The drive unit 110 may comprise an identification sensor 119 (e.g. a tag and/or code reader) which is configured to determine sensor data regarding the identification module 129. The identification sensor 119 and the identification module 129 may be positioned at respective faces or sides of the drive unit 110 and the dispensing unit 120, which are facing each other when coupling the dispensing unit 120 to the drive unit 110. By doing this, a reliable identification of a dispensing unit 120 can be ensured.

The control unit 111 may be configured to determine whether the dispensing unit 120 is correctly coupled to the drive unit 110, based on the sensor data provided by the identification sensor 119. Alternatively or in addition, the control unit 111 may be configured to determine whether a dispensing unit 120 with a particular identifier has been coupled to the drive unit 110, based on the sensor data provided by the identification sensor 119. By making use of identification means 119, 129, the reliability and the comfort of a seasoning process may be further improved.

As indicated above, the dispensing mechanism 127 may comprise a conveyer 127, notably a screw-conveyer, for transferring a certain amount of spice 130 from the storage compartment 121 of a dispensing unit 120 to the opening 126 of the dosing device 100 (notably of the dispensing unit 120). Alternatively or in addition, the dispensing mechanism 127 may comprise a grinder for grinding the spice 130 stored within the storage compartment 121. Hence, different types of dispensing units 120 may be provided for different types of spices 130 (wherein the different types of spices 130 may require different types of processing in the context of a seasoning process). The type of dispensing unit 120 and/or the type of dispensing mechanism 127 may be indicated by the identification module 129 of the dispensing units 120. Hence, a dosing device 100 may be provided, which allows seasoning using a wide variety of different types of spices 130.

The control unit 111 may be configured to determine a type of spice 130 which is stored within the dispensing unit 120 that is coupled to the drive unit 110 (e.g. using data stored on or indicated by the identification module 129 of the dispensing unit 120). Alternatively or in addition, the control unit 111 may be configured to determine a type of dispensing mechanism 127 used by the dispensing unit 120 (e.g. based on data stored on or indicated by the identification module 129 of the dispensing unit 120). Alternatively or in addition, the control unit 111 may be configured to determine the identifier of the dispensing unit 120 (e.g. based on data stored on or indicated by the identification module 129 of the dispensing unit 120).

Furthermore, the control unit 111 may be configured to operate the dispensing mechanism 127 in order to transfer the target amount of the spice 130 to the opening 126 of the dosing device 100 (notably to the opening 126 of the dispensing unit 120), in dependence of the determined type of spice 130, in dependence of the determined type of dispensing mechanism 127 and/or in dependence of the determined identifier. By taking into account information about the dispensing unit 120 which is coupled to the drive unit 110, the preciseness of dosing a spice 130 may be increased further.

The control unit 111 of the dosing device 100 may enable a user to insert different types of spices 130 or spice mixes into the storage compartment 121 of a dispensing unit 120. For this purpose, labeling of a dispensing unit 120 may be enabled. In particular, the control unit 111 may be configured to determine an identifier of a particular dispensing unit 120 (which is to be used for dispensing a particular type of spice 130 or spice mix). Furthermore, the control unit 111 may be configured to determine a type of spice 130 or a spice mix which has been filled and/or which will be filled into the storage compartment 121 of the particular dispensing unit 120. This can be done via a user interface 117 of the dosing device 100 and/or via the user interface of an external unit 140 (e.g. a smartphone). The control unit 111 may then associate the type of spice 130 or spice mix with the identifier of the dispensing unit 120, thereby enabling a user to label a dispensing unit 120 for different types of spices 130 in a flexible manner.

The control unit 111 may be configured to provide a recording function for recording usage of the dosing device 100 during preparation of a dish. In particular, it may be recorded, which one or more dispensing units 120 have been attached to the drive unit 110 during preparation of a dish. Furthermore, information regarding the respective amounts of spice 130 that have been dispensed may be recorded.

Furthermore, the control unit 111 may be configured to determine a spice mix formula for the dish that has been prepared, based on the recorded usage of the dosing device 100, wherein the spice mix formula indicates one or more types of spices 130 and their respective target amounts. Hence, the control unit 111 of the dosing device 100 may enable a user to create personal spice mix formulas in a precise and comfortable manner.

The control unit 111 may be configured to determine an initial fill level of the spice 130 within the storage compartment 121. By way of example, the initial fill level of the storage compartment 121 of a dispensing unit 120 may be stored on a storage unit of the dispensing unit 120. Alternatively or in addition, the drive unit 110 may comprise a storage unit or may have access to an external storage unit for storing the fill levels of the storage compartments 121 of a plurality of different dispensing units 120.

Furthermore, the control unit 111 may be configured to update the initial fill level based on the target amount of the spice 130, which has been dispensed, in order to determine an updated fill level of the spice 130 within the storage compartment 121. The updated fill level may then be stored on a storage unit of the dosing device 100 and/or on a storage unit of the dispensing unit 120 and/or on a storage unit of an external unit 140.

Alternatively or in addition, the dispensing unit 120 may comprise a fill level sensor which is configured to provide sensor data regarding the fill level of the spice 130 within the storage compartment 121. The control unit 111 may then be configured to determine the fill level of the spice 130 within the storage compartment 121 based on the sensor data of the fill level sensor. By tracking usage of a spice 130 and/or by using sensor data from a fill level sensor, replenishment of the dispensing units 120 may be controlled and guided in an efficient and comfortable manner.

The control unit 111 may be configured to determine a user profile indicating user preferences of a user with regards to seasoning. By way of example, the user profile may indicate whether a user has a tendency to use a relatively high or a relatively low amount of a particular type of spice 130. This information may be provided for different types of spices 130. The target amount of a spice 130 to be dispensed from a particular dispensing unit 120 may then be determined based on the user profile. In particular, the amount indicated in a spice mix formula may be adapted (e.g. increased or reduced) in dependence of a user profile. By taking into account user profiles for one or more users, the quality of a seasoning process may be improved.

The control unit 111 may be configured to determine user feedback from a user regarding a dish that has been seasoned using the dosing device 100. By way of example, a user may indicate as user feedback, whether a dish was too spicy or not enough spicy. User preferences of the user with regards to seasoning may then be determined based on the user feedback. By providing a user feedback process, a user profile for a user may be generated in a reliable and comfortable manner.

A dispensing unit 120 may be configured to enable automatic dispensing of the spice 130 stored within the storage compartment 121, when the dispensing unit 120 is coupled to the drive unit 110. Furthermore, a dispensing unit 120 may enable manual dispensing of the spice 130 stored within the storage compartment 121, when the dispensing unit 120 is detached from the drive unit 110. Hence, a dispensing unit 120 may be used in a flexible manner for manual and for automatic dispensing, thereby increasing the comfort for a user within a seasoning process.

In particular, the storage compartment 121 of a dispensing unit 120 may comprise a closable opening 306 for manual dispensing of the spice 130 stored within the storage compartment 121. By way of example, the dispensing unit 120 may comprise a lid 301 for closing or opening the closable opening 306. The closable opening 306 for manual dispensing of the spice 130 stored within the storage compartment 121 may be positioned on an opposite side of the dispensing unit 120 with regards to the opening 126 of the dosing device 100 for automatic dispensing of the spice 130 stored within the storage compartment 121. Hence, combined manual and automatic dispensing may be enabled in a reliable and efficient manner.

## Claims

1. A handheld dosing device (100) for dosing one or more spices (130); wherein
- the dosing device (100) comprises a drive unit (110) and a dispensing unit (120);
- the drive unit (110) and the dispensing unit (120) comprise respective coupling elements (113, 123) for coupling the dispensing unit (120) to the drive unit (110) in a detachable manner;
- the dispensing unit (120) comprises a storage compartment (121) configured to store a spice (130);
- the dispensing unit (120) comprises a dispensing mechanism (127) configured to transfer an adjustable amount of the spice (130) from the storage compartment (121) to an opening (126) of the dosing device (100); and
- the drive unit (110) comprises a control unit (111) configured to
- determine a target amount of the spice (130) to be dispensed; and
- subsequently operate the dispensing mechanism (127) in order to transfer the target amount of the spice (130) to the opening (126) of the dosing device (100);
**characterized in that**
- the drive unit (110) and the dispensing unit (120) each comprise a communication module (116, 136) which are configured to communicate with one another over a wireless communication link (141);
- the dispensing unit (120) comprises a signaling module (137); and
- the control unit (111) is configured to
- determine that the dispensing unit (120) is to be coupled to the drive unit (110) for dispensing the spice (130) which is stored within the storage compartment (121) of the dispensing unit (120); and
- send a control signal to the dispensing unit (120) for activating the signaling module (137) of the dispensing unit (120).

2. The dosing device (100) according to claim 1, wherein the control unit (111) is configured to determine the target amount of the spice (130)
- based on a user input of a user of the dosing device (100) on a user interface (117) of the dosing device (100) and/or on a user interface of an external unit (140) which is in data communication with the dosing device (100); and/or
- based on a pre-determined spice mix formula for a mix of several different types of spices (130) and/or based on recipe for a dish which is being prepared using the dosing device (100); wherein the spice mix formula and/or the recipe indicate target amounts for one or more different spices.

3. The dosing device (100) according to any of the previous claim, wherein
- the dosing device (100), notably the drive unit (110), comprises a communication module (116) which is configured to perform data communication over a wireless communication link (141) with an external unit (140); and
- the control unit (111) is configured to receive data indicating the target amount of the spice (130) from the external unit (140) via the communication module (116).

4. The dosing device (100) according to any previous claim, wherein
- the dosing device (100), notably the drive unit (110), comprises an input element which is configured to be actuated by a user of the dosing device (100); and
- the control unit (111) is configured to
- detect an actuation of the input element; and
- in reaction to this, operate the dispensing mechanism (127) in order to transfer the target amount of the spice (130) to the opening (126) of the dosing device (100).

5. The dosing device (100) according to claim 4, wherein
- the actuation of the input element is only directed at activating the dispensing mechanism (127);
- the actuation of the input element is not directed at controlling a duration of operation of the dispensing mechanism (127);
- the dispensing mechanism (127) is automatically operated to dispense the target amount of the spice (130), notably regardless a duration of actuation of the input element; and/or
- the dispensing mechanism (127) is deactivated automatically, as soon as the target amount of the spice (130) has been transferred to the opening (126) of the dosing device (100).

6. The dosing device (100) according to any previous claim, wherein the control unit (111) is configured to
- determine a spice mix formula for a mix of several different types of spices (130) and/or a recipe for a dish; wherein the spice mix formula and/or the recipe indicate several different types of spices (130) and their respective target amounts; and
- in a sequential manner for the types of spices (130) which are indicated by the spice mix formula and/or the recipe,
- indicate to a user the dispensing unit (120) from a plurality of different dispensing units (120), which is to be coupled to the drive unit (110) for a particular type of spice (120) that is indicated by the spice mix formula and/or the recipe;
- detect that the indicated dispensing unit (120) has been coupled to the drive unit (110); and
- operate the dispensing mechanism (127) to dispense the target amount of the spice (130), which is indicated by the spice mix formula and/or the recipe.

7. The dosing device (100) according to any previous claim, wherein the signaling module (137) comprises a light emitting diode that can be activated or deactivated.

8. The dosing device (100) according to any previous claim, wherein the control unit (111) is configured to
- parse an unstructured recipe for a dish, in order to determine a structured recipe that indicates one or more types of spices (130) and their respective amounts, which are to be added during preparation of the dish; and
- use the structured recipe for guiding a user through a dispensing process for adding the one or more types of spices (130) to the dish.

9. The dosing device (100) according to any previous claim, wherein the control unit (111) is configured to
- determine the target amount for the spice (130) using one of a plurality of different measuring units; wherein the different measuring units comprise one or more weight measuring units, notably gram or pound, and/or one or more volume measuring units, notably cubic meter, number of table spoons, number of tea spoons, number of cups; and
- determine a control signal for controlling an actuator (112) for operating the dispensing mechanism (127) based on the target amount which is indicated using one of the plurality of different measuring units.

10. The dosing device (100) according to any previous claim, wherein
- the dispensing unit (120) comprises an identification module (129) indicating an identifier of the dispensing unit (120);
- different dispensing units (120) exhibit different identifiers;
- the identification module (129) notably comprises a radio frequency tag and/or a machine-readable code;
- the drive unit (110) comprises an identification sensor (119) which is configured to determine sensor data regarding the identification module (129); and
- the control unit (111) is configured to determine
- whether the dispensing unit (120) is correctly coupled to the drive unit (110), based on the sensor data provided by the identification sensor (119); and/or
- whether a dispensing unit (120) with a particular identifier has been coupled to the drive unit (110), based on the sensor data provided by the identification sensor (119).

11. The dosing device (100) according to any previous claim, wherein
- the storage compartment (121) is refillable; and/or
- the storage compartment (121) is exchangeable.

12. The dosing device (100) according to any previous claim, wherein
- the dispensing mechanism (127) comprises a conveyer (127), notably a screw-conveyer, for transferring spice (130) from the storage compartment (121) to the opening (126) of the dosing device (100); and/or
- the dispensing mechanism (127) comprises a grinder for grinding the spice (130) stored within the storage compartment (121).

13. The dosing device (100) according to any previous claim, wherein the control unit (111) is configured to
- determine a type of spice (130) which is stored within the dispensing unit (120) that is coupled to the drive unit (110); and/or
- determine a type of dispensing mechanism (127) used by the dispensing unit (120); and/or
- determine an identifier of the dispensing unit (120); and
- operate the dispensing mechanism (127) in order to transfer the target amount of the spice (130) to the opening (126) of the dosing device (100), in dependence of the determined type of spice (130), in dependence of the determined type of dispensing mechanism (127) and/or in dependence of the determined identifier.

14. The dosing device (100) according to any previous claim, wherein the control unit (111) is configured to
- determine an identifier of a dispensing unit (120);
- determine a type of spice (130) which has been filled into the storage compartment (121) of the dispensing unit (120), notably via a user interface (117) of the dosing device (100); and
- associate the type of spice (130) with the identifier of the dispensing unit (120).

15. The dosing device (100) according to any previous claim, wherein the control unit (111) is configured to
- provide a recording function for recording usage of the dosing device (100) during preparation of a dish; and
- determine a spice mix formula for the dish, based on the recorded usage of the dosing device (100); wherein the spice mix formula indicates one or more types of spices (130) and their respective target amounts.

## Patentansprüche

1. Tragbare Dosiervorrichtung (100) zum Dosieren eines oder mehrerer Gewürze (130), wobei
- die Dosiervorrichtung (100) eine Antriebseinheit (110) und eine Abgabeeinheit (120) umfasst,
- die Antriebseinheit (110) und die Abgabeeinheit (120) jeweilige Verbindungselemente (113, 123) zum lösbaren Verbinden der Abgabeeinheit (120) mit der Antriebseinheit (110) umfasst,
- die Abgabeeinheit (120) eine Füllkammer (121) umfasst, die zum Aufbewahren eines Gewürzes (130) konfiguriert ist,
- die Abgabeeinheit (120) einen Abgabemechanismus (127) umfasst, der zum Abgeben einer einstellbaren Menge des Gewürzes (130) aus der Füllkammer (121) in eine Öffnung (126) der Dosiervorrichtung (100) konfiguriert ist, und
- die Antriebseinheit (110) eine Steuereinheit (111) umfasst, die so konfiguriert ist, dass sie:
- eine Sollmenge des abzugebenden Gewürzes (130) bestimmt und
- danach den Abgabemechanismus (127) betätigt, so dass die Sollmenge Gewürz (130) in die Öffnung (126) der Dosiervorrichtung (100) abgegeben wird,
**dadurch gekennzeichnet, dass**
- die Antriebseinheit (110) und die Abgabeeinheit (120) jeweils ein Kommunikationsmodul (116, 136) umfassen, die so konfiguriert sind, dass sie über eine drahtlose Kommunikationsverbindung (141) miteinander kommunizieren,
- die Abgabeeinheit (120) ein Signalisierungsmodul (137) umfasst und
- die Steuereinheit (111) so konfiguriert ist, dass sie:
- bestimmt, dass die Abgabeeinheit (120) zum Abgeben des Gewürzes (130), das in der Füllkammer (121) der Abgabeeinheit (120) aufbewahrt ist, mit der Antriebseinheit (110) verbunden werden soll, und
- zum Aktivieren des Signalisierungsmoduls (137) der Abgabeeinheit (120) ein Steuersignal an die Abgabeeinheit (120) sendet.

2. Dosiervorrichtung (100) nach Anspruch 1, wobei die Steuereinheit (111) so konfiguriert ist, dass sie die Sollmenge Gewürz (130)
- auf der Grundlage einer Benutzereingabe eines Benutzers der Dosiervorrichtung (100) an einer Benutzeroberfläche (117) der Dosiervorrichtung (100) und/oder einer Benutzeroberfläche einer externen Einheit (140) bestimmt, die mit der Dosiervorrichtung (100) Daten austauscht, und/oder
- auf der Grundlage einer vorgegebenen Gewürzmischungsrezeptur für eine Mischung aus mehreren verschiedenen Arten von Gewürzen (130) und/oder eines Rezepts für ein Gericht bestimmt, das unter Verwendung der Dosiervorrichtung (100) zubereitet wird, wobei die Gewürzmischungsrezeptur und/oder das Rezept Sollmengen für ein oder mehrere verschiedene Gewürze angibt.

3. Dosiervorrichtung (100) nach einem der vorhergehenden Ansprüche, wobei
- die Dosiervorrichtung (100), insbesondere die Antriebseinheit (110), ein Kommunikationsmodul (116) umfasst, das so konfiguriert ist, dass es mit einer externen Einheit (140) über eine drahtlose Kommunikationsverbindung (141) Daten austauscht, und
- die Steuereinheit (111) so konfiguriert ist, dass sie über das Kommunikationsmodul (116) aus der externen Einheit (140) Daten empfängt, die die Sollmenge des Gewürzes (130) angeben.

4. Dosiervorrichtung (100) nach einem der vorhergehenden Ansprüche, wobei
- die Dosiervorrichtung (100), insbesondere die Antriebseinheit (110), ein Eingabeelement umfasst, das so konfiguriert ist, dass es sich von einem Benutzer der Dosiervorrichtung (100) betätigen lässt, und
- die Steuereinheit (111) so konfiguriert ist, dass sie:
- eine Betätigung des Eingabeelements erkennt und
- als Reaktion darauf den Abgabemechanismus (127) betätigt, so dass die Sollmenge Gewürz (130) in die Öffnung (126) der Dosiervorrichtung (100) abgegeben wird.

5. Dosiervorrichtung (100) nach Anspruch 4, wobei
- die Betätigung des Eingabeelements nur zum Aktivieren des Abgabemechanismus (127) dienen soll,
- die Betätigung des Eingabeelements nicht zum Regeln einer Betriebsdauer des Abgabemechanismus (127) dienen soll,
- der Abgabemechanismus (127) insbesondere unabhängig von einer Dauer der Betätigung des Eingabeelements automatisch zum Abgeben der Sollmenge des Gewürzes (130) betätigt wird und/oder
- der Abgabemechanismus (127) automatisch deaktiviert wird, sobald die Sollmenge Gewürz (130) in die Öffnung (126) der Dosiervorrichtung (100) abgegeben worden ist.

6. Dosiervorrichtung (100) nach einem der vorhergehenden Ansprüche, wobei die Steuereinheit (111) so konfiguriert ist, dass sie:
- für eine Mischung aus mehreren verschiedenen Arten von Gewürzen (130) und/oder ein Rezept für ein Gericht eine Gewürzmischungsrezeptur bestimmt, wobei die Gewürzmischungsrezeptur und/oder das Rezept mehrere verschiedene Arten von Gewürzen (130) und deren jeweilige Sollmenge angibt, und
- nacheinander für die Arten von Gewürzen (130), die für die Gewürzmischungsrezeptur und/oder das Rezept angegeben sind,
- für einen Benutzer die Abgabeeinheit (120) unter mehreren verschiedenen Abgabeeinheiten (120) angibt, die für eine bestimmte Art Gewürz (120), welche von der Gewürzmischungsrezeptur und/oder dem Rezept angegeben wird, mit der Antriebseinheit (110) verbunden werden soll,
- erkennt, dass die angegebene Abgabeeinheit (120) mit der Antriebseinheit (110) verbunden worden ist, und
- den Abgabemechanismus (127) zum Abgeben der Sollmenge Gewürz (130) betätigt, die von der Gewürzmischungsrezeptur und/oder dem Rezept angegeben wird.

7. Dosiervorrichtung (100) nach einem der vorhergehenden Ansprüche, wobei das Signalisierungsmodul (137) eine Leuchtdiode umfasst, die aktiviert oder deaktiviert werden kann.

8. Dosiervorrichtung (100) nach einem der vorhergehenden Ansprüche, wobei die Steuereinheit (111) so konfiguriert ist, dass sie:
- ein nicht strukturiertes Rezept für ein Gericht analysiert und so ein strukturiertes Rezept bestimmt, das eine oder mehrere Arten Gewürze (130) sowie deren jeweilige Menge angibt, die bei der Zubereitung des Gerichts hinzugefügt werden soll(en), und
- das strukturierte Rezept zum Anleiten eines Benutzers bei einem Abgabeprozess zum Hinzufügen der einen oder der mehreren Arten Gewürz (130) zu dem Gericht benutzt.

9. Dosiervorrichtung (100) nach einem der vorhergehenden Ansprüche, wobei die Steuereinheit (111) so konfiguriert ist, dass sie:
- unter Verwendung einer von mehreren Maßeinheiten die Sollmenge für das Gewürz (130) bestimmt, wobei die verschiedenen Messeinheiten eine oder mehrere Gewichtsmaßeinheiten, insbesondere Gramm oder Pfund, und/oder eine oder mehrere Volumenmesseinheiten, insbesondere Kubikmeter, Anzahl Esslöffel, Anzahl Teelöffel, Anzahl Cups, umfassen, und
- auf der Grundlage der angegebenen Sollmenge unter Verwendung einer der mehreren verschiedenen Maßeinheiten ein Steuersignal zum Steuern eines Stellelements (112) zum Betätigen des Abgabemechanismus (127) bestimmt.

10. Dosiervorrichtung (100) nach einem der vorhergehenden Ansprüche, wobei
- die Abgabeeinheit (120) ein Identifizierungsmodul (129) umfasst, das eine Kennung der Abgabeeinheit (120) angibt,
- verschiedene Abgabeeinheiten (120) unterschiedliche Kennungen aufweisen,
- das Identifizierungsmodul (129) insbesondere einen Hochfrequenztransponder und/oder einen maschinenlesbaren Code umfasst,
- die Antriebseinheit (110) einen Identifizierungssensor (119) umfasst, der so konfiguriert ist, dass er Sensordaten in Bezug auf das Identifizierungsmodul (129) bestimmt, und
- die Steuereinheit (111) so konfiguriert ist, dass sie
- auf der Grundlage der von dem Identifizierungssensor (119) gelieferten Sensordaten feststellt, ob die Abgabeeinheit (120) ordnungsgemäß mit der Antriebseinheit (110) verbunden ist, und/oder
- auf der Grundlage der von dem Identifizierungssensor (119) gelieferten Sensordaten feststellt, ob eine Abgabeeinheit (120) mit einer bestimmten Kennung mit der Antriebseinheit (110) verbunden worden ist.

11. Dosiervorrichtung (100) nach einem der vorhergehenden Ansprüche, wobei
- die Füllkammer (121) wiederauffüllbar ist und/oder
- die Füllkammer (121) austauschbar ist.

12. Dosiervorrichtung (100) nach einem der vorhergehenden Ansprüche, wobei
- der Abgabemechanismus (127) eine Fördervorrichtung (127), insbesondere eine Förderschnecke, zum Abgeben von Gewürz (130) aus der Füllkammer (121) in die Öffnung (126) der Dosiervorrichtung (100) umfasst und/oder
- der Abgabemechanismus (127) eine Mahlvorrichtung zum Mahlen des in der Füllkammer (121) aufbewahrten Gewürzes (130) umfasst.

13. Dosiervorrichtung (100) nach einem der vorhergehenden Ansprüche, wobei die Steuereinheit (111) so konfiguriert ist, dass sie:
- eine Art Gewürz (130) bestimmt, die in der Abgabeeinheit (120) aufbewahrt wird, welche mit der Antriebseinheit (110) verbunden ist, und/oder
- eine Art Abgabemechanismus (127) bestimmt, der von der Abgabeeinheit (120) verwendet wird, und/oder
- eine Kennung der Abgabeeinheit (120) bestimmt und
- den Abgabemechanismus (127) betätigt und so je nach bestimmter Art Gewürz (130), bestimmter Art Abgabemechanismus (127) und/oder bestimmter Kennung die Sollmenge Gewürz (130) in die Öffnung (126) der Dosiervorrichtung (100) abgibt.

14. Dosiervorrichtung (100) nach einem der vorhergehenden Ansprüche, wobei die Steuereinheit (111) so konfiguriert ist, dass sie:
- eine Kennung einer Abgabeeinheit (120) bestimmt,
- insbesondere über eine Benutzerschnittstelle (117) der Dosiervorrichtung (100) eine Art Gewürz (130) bestimmt, die in die Füllkammer (121) der Abgabeeinheit (120) gefüllt worden ist, und
- die Art Gewürz (130) mit der Kennung der Abgabeeinheit (120) verknüpft.

15. Dosiervorrichtung (100) nach einem der vorhergehenden Ansprüche, wobei die Steuereinheit (111) so konfiguriert ist, dass sie:
- eine Aufzeichnungsfunktion zum Aufzeichnen der Nutzung der Dosiervorrichtung (100) bei der Zubereitung eines Gerichts zur Verfügung stellt und
- auf der Grundlage der aufgezeichneten Nutzung der Dosiervorrichtung (100) eine Gewürzmischungsrezeptur für das Gericht bestimmt, wobei die Gewürzmischungsrezeptur eine oder mehrere Arten von Gewürzen (130) und deren jeweilige Sollmenge angibt.

## Revendications

1. Dispositif de dosage portable (100) pour doser une ou plusieurs épice(s) (130) ; dans lequel :
- le dispositif de dosage (100) comprend une unité d'entraînement (110) et une unité de distribution (120) ;
- l'unité d'entraînement (110) et l'unité de distribution (120) comprennent des éléments de couplage respectifs (113, 123) pour coupler l'unité de distribution (120) à l'unité d'entraînement (110) d'une manière amovible ;
- l'unité de distribution (120) comprend un compartiment de stockage (121) qui est configuré pour stocker une épice (130) ;
- l'unité de distribution (120) comprend un mécanisme de distribution (127) qui est configuré pour transférer une quantité réglable de l'épice (130) depuis le compartiment de stockage (121) jusqu'à une ouverture (126) du dispositif de dosage (100) ; et
- l'unité d'entraînement (110) comprend une unité de commande (111) qui est configurée pour :
- déterminer une quantité cible de l'épice (130) à distribuer ; et
- subséquemment, faire fonctionner le mécanisme de distribution (127) afin de transférer la quantité cible de l'épice (130) jusqu'à l'ouverture (126) du dispositif de dosage (100) ;
**caractérisé en ce que** :
- l'unité d'entraînement (110) et l'unité de distribution (120) comprennent chacune un module de communication (116, 136), lesquels modules de communication sont configurés pour communiquer l'un avec l'autre sur une liaison de communication sans fil (141) ;
- l'unité de distribution (120) comprend un module de signalisation (137) ; et
- l'unité de commande (111) est configurée pour :
- déterminer que l'unité de distribution (120) doit être couplée à l'unité d'entraînement (110) pour distribuer l'épice (130) qui est stockée à l'intérieur du compartiment de stockage (121) de l'unité de distribution (120) ; et
- envoyer un signal de commande sur l'unité de distribution (120) pour activer le module de signalisation (137) de l'unité de distribution (120).

2. Dispositif de dosage (100) selon la revendication 1, dans lequel l'unité de commande (111) est configurée pour déterminer la quantité cible de l'épice (130)
- sur la base d'une entrée d'utilisateur d'un utilisateur du dispositif de dosage (100) sur une interface utilisateur (117) du dispositif de dosage (100) et/ou sur une interface utilisateur d'une unité externe (140) qui est en communication de données avec le dispositif de dosage (100) ; et/ou
- sur la base d'une formule de mélange d'épices prédéterminée pour un mélange de plusieurs types différents d'épices (130) et/ou sur la base d'une recette pour un plat qui est en cours de préparation en utilisant le dispositif de dosage (100) ; dans lequel la formule de mélange d'épices et/ou la recette indique(nt) des quantités cibles pour une ou plusieurs épices différentes.

3. Dispositif de dosage (100) selon l'une quelconque des revendications précédentes, dans lequel :
- le dispositif de dosage (100), en particulier l'unité d'entraînement (110), comprend un module de communication (116) qui est configuré pour réaliser une communication de données sur une liaison de communication sans fil (141) avec une unité externe (140) ; et
- l'unité de commande (111) est configurée pour recevoir des données qui indiquent la quantité cible de l'épice (130) en provenance de l'unité externe (140) via le module de communication (116).

4. Dispositif de dosage (100) selon l'une quelconque des revendications précédentes, dans lequel :
- le dispositif de dosage (100), en particulier l'unité d'entraînement (110), comprend un élément d'entrée qui est configuré pour être actionné par un utilisateur du dispositif de dosage (100) ; et
- l'unité de commande (111) est configurée pour :
- détecter un actionnement de l'élément d'entrée ; et
- en réaction à cette détection, faire fonctionner le mécanisme de distribution (127) afin de transférer la quantité cible de l'épice (130) jusqu'à l'ouverture (126) du dispositif de dosage (100).

5. Dispositif de dosage (100) selon la revendication 4, dans lequel :
- l'actionnement de l'élément d'entrée est seulement axé sur l'activation du mécanisme de distribution (127) ;
- l'actionnement de l'élément d'entrée n'est pas axé sur la commande d'une durée de fonctionnement du mécanisme de distribution (127) ;
- le mécanisme de distribution (127) est mis en fonctionnement de manière automatique pour distribuer la quantité cible de l'épice (130), en particulier indépendamment d'une durée d'actionnement de l'élément d'entrée ; et/ou
- le mécanisme de distribution (127) est désactivé automatiquement, aussitôt que la quantité cible de l'épice (130) a été transférée jusqu'à l'ouverture (126) du dispositif de dosage (100).

6. Dispositif de dosage (100) selon l'une quelconque des revendications précédentes, dans lequel l'unité de commande (111) est configurée pour :
- déterminer une formule de mélange d'épices pour un mélange de plusieurs types différents d'épices (130) et/ou une recette pour un plat ; dans lequel la formule de mélange d'épices et/ou la recette indique(nt) plusieurs types différents d'épices (130) et leurs quantités cibles respectives ; et
- d'une manière séquentielle pour les types d'épices (130) qui sont indiqués par la formule de mélange d'épices et/ou par la recette,
- indiquer à un utilisateur l'unité de distribution (120) parmi une pluralité de différentes unités de distribution (120) qui doit être couplée à l'unité d'entraînement (110) pour un type particulier d'épice (120) qui est indiqué par la formule de mélange d'épices et/ou par la recette ;
- détecter que l'unité de distribution indiquée (120) a été couplée à l'unité d'entraînement (110) ; et
- faire fonctionner le mécanisme de distribution (127) pour qu'il distribue la quantité cible de l'épice (130), qui est indiquée par la formule de mélange d'épices et/ou par la recette.

7. Dispositif de dosage (100) selon l'une quelconque des revendications précédentes, dans lequel le module de signalisation (137) comprend une diode électroluminescente qui peut être activée ou désactivée.

8. Dispositif de dosage (100) selon l'une quelconque des revendications précédentes, dans lequel l'unité de commande (111) est configurée pour :
- analyser une recette non structurée pour un plat, afin de déterminer une recette structurée qui indique un ou plusieurs type(s) d'épices (130) et leurs quantités respectives, qui doivent être ajoutées pendant la préparation du plat ; et
- utiliser la recette structurée pour guider un utilisateur pour dérouler un processus de distribution pour ajouter les un ou plusieurs types d'épices (130) au plat.

9. Dispositif de dosage (100) selon l'une quelconque des revendications précédentes, dans lequel l'unité de commande (111) est configurée pour :
- déterminer la quantité cible pour l'épice (130) en utilisant l'une d'une pluralité de différentes unités de mesure ; dans lequel les différentes unités de mesure comprennent une ou plusieurs unité(s) de mesure de poids, en particulier le gramme ou la livre, et/ou une ou plusieurs unité(s) de mesure de volume, en particulier le mètre cube, le nombre de cuillères à soupe, le nombre de tasses ; et
- déterminer un signal de commande pour commander un actionneur (112) pour faire fonctionner le mécanisme de distribution (127) sur la base de la quantité cible qui est indiquée en utilisant l'une de la pluralité de différentes unités de mesure.

10. Dispositif de dosage (100) selon l'une quelconque des revendications précédentes, dans lequel :
- l'unité de distribution (120) comprend un module d'identification (129) qui indique un identifiant de l'unité de distribution (120) ;
- des unités de distribution différentes (120) présentent des identifiants différents ;
- le module d'identification (129) comprend en particulier une étiquette radiofréquence et/ou un code pouvant être lu par machine ;
- l'unité d'entraînement (110) comprend un capteur d'identification (119) qui est configuré pour déterminer des données de capteur qui concernent le module d'identification (129) ; et
- l'unité de commande (111) est configurée pour déterminer
- si oui ou non l'unité de distribution (120) est correctement couplée à l'unité d'entraînement (110), sur la base des données de capteur qui sont fournies par le capteur d'identification (119) ; et/ou
- si oui ou non une unité de distribution (120) qui présente un identifiant particulier a été couplée à l'unité d'entraînement (110), sur la base des données de capteur qui sont fournies par le capteur d'identification (119).

11. Dispositif de dosage (100) selon l'une quelconque des revendications précédentes, dans lequel :
- le compartiment de stockage (121) est rechargeable ; et/ou
- le compartiment de stockage (121) est remplaçable.

12. Dispositif de dosage (100) selon l'une quelconque des revendications précédentes, dans lequel :
- le mécanisme de distribution (127) comprend un convoyeur (127), en particulier un convoyeur à vis, pour transférer l'épice (130) depuis le compartiment de stockage (121) jusqu'à l'ouverture (126) du dispositif de dosage (100) ; et/ou
- le mécanisme de distribution (127) comprend un moulin pour moudre l'épice (130) qui est stockée à l'intérieur du compartiment de stockage (121).

13. Dispositif de dosage (100) selon l'une quelconque des revendications précédentes, dans lequel l'unité de commande (111) est configurée pour :
- déterminer un type de l'épice (130) qui est stockée à l'intérieur de l'unité de distribution (120) qui est couplée à l'unité d'entraînement (110) ; et/ou
- déterminer un type du mécanisme de distribution (127) qui est utilisé par l'unité de distribution (120) ; et/ou
- déterminer un identifiant de l'unité de distribution (120) ; et
- faire fonctionner le mécanisme de distribution (127) afin de transférer la quantité cible de l'épice (130) jusqu'à l'ouverture (126) du dispositif de dosage (100), en fonction du type déterminé de l'épice (130), en fonction du type déterminé du mécanisme de distribution (127) et/ou en fonction de l'identifiant déterminé.

14. Dispositif de dosage (100) selon l'une quelconque des revendications précédentes, dans lequel l'unité de commande (111) est configurée pour :
- déterminer un identifiant d'une unité de distribution (120) ;
- déterminer un type de l'épice (130) qui a été remplie à l'intérieur du compartiment de stockage (121) de l'unité de distribution (120), en particulier via une interface utilisateur (117) du dispositif de dosage (100) ; et
- associer le type de l'épice (130) à l'identifiant de l'unité de distribution (120).

15. Dispositif de dosage (100) selon l'une quelconque des revendications précédentes, dans lequel l'unité de commande (111) est configurée pour :
- assurer une fonction d'enregistrement pour enregistrer l'utilisation du dispositif de dosage (100) pendant la préparation d'un plat ; et
- déterminer une formule de mélange d'épices pour le plat, sur la base de l'utilisation enregistrée du dispositif de dosage (100) ; dans lequel la formule de mélange d'épices indique un ou plusieurs type(s) d'épices (130) et leurs quantités cibles respectives.
